# EUROPEAN PATENT SPECIFICATION

(11) **EP 1 884 385 B1**
(45) Date of publication and mention of the grant of the patent: **17.12.2008**
(21) Application number: 05752222.9
(22) Date of filing: 25.05.2005
(51) Int. Cl.: B60J 5/04

(54) **LATERAL REINFORCEMENT FOR MOTOR VEHICLE DOORS**
SEITLICHE VERSTÄRKUNG FÜR KRAFTFAHRZEUGTÜREN
ELEMENT DE RENFORT LATERAL POUR PORTIERES DE VEHICULES AUTOMOBILES

(43) Date of publication of application: 06.02.2008
(73) Proprietor: Cie Automotive, S.A., 20720 Azkoitia (Guipuzcoa) (ES)
(72) Inventor: LOIZAGA URBISTONDO, Iñigo, E-48250 Zaldibar (Vizcaya) (ES)
(74) Representative: Carpintero Lopez, Francisco
(86) International application number: PCT/ES2005/000295
(87) International publication number: WO 2006/125833

(56) References cited:
- WO-A1-20/05035339
- ES-T3- 2 208 525
- US-A- 5 692 797
- US-B1- 6 421 979
- US-B1- 6 679 540

## Description

### TECHNICAL FIELD OF THE INVENTION

The invention is comprised in the field of reinforcement parts or elements for motor vehicle doors.

### BACKGROUND OF THE INVENTION

One of the functions to be met by motor vehicle doors is to protect the driver and passengers from side impacts that the vehicle may experience in the event of accidents. To that end, the doors normally include side reinforcing elements which basically comprise metallic bars or cross members with a configuration that allows absorbing lateral impacts. These reinforcing elements usually have an elongated configuration with a main portion with a substantially trapezoidal cross-section that is U-shaped, sinusoidal-shaped, etc., and with ends with a suitable configuration for fixing the element to the door structure. In other words, it is usually an element with two fixing ends and with a central part having one or more longitudinal drawings or ribs extending along most of the entire length of the element. The design of this central part has the purpose of allowing the element to absorb a large part of the force of a side impact, for example, in the event of an accident.

In the initial moment of an impact, the reinforcing element starts to deform, acquiring a deformation in its central area which grows until reaching the material elastic limit, after which point the element no longer withstands any further stress and starts to act like a hinge. When this type of elements is designed, the objective is to achieve a design which, together with the features of the material used, allows achieving a controlled deformation and delaying the moment in which the "hinge effect" occurs, so as to prevent the element from deforming up to the point where it penetrates the inside of the vehicle and injures its occupants.

In other words, the reinforcing elements must be able to absorb strong impacts and withstand great deformations (as a result of an impact the central part of a reinforcing element can shift a distance of up to 300 mm or more from its initial position) without collapsing.

Today it is common to produce this type of reinforcing elements with metal. The patent applications with publication numbers US-A-2002/0195836 and EP-A-0869019 disclose examples of this type of metallic reinforcing elements.

A metallic material commonly used for this type of parts is steel with good elastic properties, for example steels such as those mentioned in EP-A-0869019. The use of this type of steel, or of any steel of a very high elastic limit, allows complying with current side impact protection requirements.

However, the forming of these steels involves specific and costly manufacturing processes, which limits the possibilities of designing the reinforcing elements so that they are compatible with the surrounding elements and components, for example, with the general door structure and/or with accessories, such as for example, power window motor supports, window regulator tracks, etc. Furthermore, the fact that the reinforcing elements are made of metal may make it necessary to apply covers on said elements and/or on components of the door that are close to or in contact with the reinforcing elements so as to reduce or prevent the contact between the reinforcing elements and the surrounding components from producing unwanted noises, corrosion, etc. WO-A-2005/035339 discloses a component substantially as defined in the preamble of claim 1.

### DESCRIPTION OF THE INVENTION

It has therefore been considered that it would be desirable to arrange a reinforcing element the design of which may be easily adapted to the surrounding elements, and which allows overcoming at least some of the drawbacks mentioned above. It has specifically been considered desirable to obtain a reinforcing element allowing great design freedom and flexibility of at least some parts of the element, while at the same time offering sufficient resistance against impacts.

The invention consists of a side reinforcing element for motor vehicles, comprising a first element and a second element.

The first element is of a first material, specifically of a metallic material, such as a steel combining good mechanical features with good forming. Microalloyed steels with elastic limits less than 480 MPa and dual phase steels with elastic limits less than 650 Microparticle perfectly adapt to these requirements.

The second element is of a second material different from the first material, such as a plastic material, for example, a glass fiber reinforced plastic material. A material with a good performance combining resistance with easy processing can be chosen. For example, good results have been seen when using glass fiber reinforced polyamides with 30% to 50% by weight of glass fiber. Good results have also been observed with polyamide-based modified copolymers, providing good mechanical features.

The first element and the second element can be coupled to one another such that when coupled to one another, the reinforcing element has an outer surface at least a part of which is made of said second material.

The resistance features of the metal (for example, a steel or steel allow with a high elastic limit) are thus combined with the favorable features that other materials (for example, plastics or at least many plastics) have in terms of the possibility of manufacturing the objects with quite varied configurations, which allows obtaining suitable designs for each case. The second element may thus incorporate suitable structures for coupling accessories (for example, a power window motor, part of the tracks of the window regulator system, etc.), while at the same time it may have a surface which at least in part is not metallic, which can be advantageous to reduce the risks of noises or corrosion at the contact points between the side reinforcing element and other parts of the door.

The second element is useful not only for providing greater "design freedom" to the corresponding part of the outer surface of the reinforcing element, but it also contributes to the resistance thereof, so it may advantageously incorporate a structure with suitable walls and partitions to provide resistance against side impacts, as will be described below.

The first material can be steel or a steel alloy, such as a steel like the one described in EP-A-0869019 or like the one mentioned above.

The second material can be plastic or another suitable material, for example one of the materials mentioned above.

The first element can have a configuration defining a longitudinal housing configured to receive a main part of the second element. For example, the first element can have a substantially U-shaped cross section, with two side walls (which can be more or less outwardly divergent) joined by a central part. These walls and central part can form the longitudinal housing.

The side walls can end in respective longitudinal flanges, which may have through holes, for example, through holes of a substantially rectangular configuration.

In addition, the first element may comprise a central section extending along most of the longitudinal extension of the first element, and two end sections having a different configuration than that of the central section, specifically a configuration adapted for coupling the element to a vehicle door structure.

In addition, the second element may have a main body or part extending longitudinally along most of the second element or along the entirety of the second element, and which is configured to be housed in the longitudinal housing of the first element.

The second element may comprise two flanges extending along the main part, and which may be provided with lugs configured to be introduced in holes of the first element, for the coupling between the first element and the second element. The lugs can have a rectangular base.

The side reinforcing element can be configured such that when the first and the second element are coupled, part of the outer surface of the side reinforcing element will comprise the flanges of the second element.

The main part of the second element may comprise two walls joined by a plurality of partitions. For example, the main part may comprise a central section and two end sections, and the partitions may be arranged with greater density in the central section than in the end sections, such that the central section has greater resistance than the end sections (according to what commonly occurs in this type of reinforcing elements). The central section may comprise partitions oriented perpendicularly in relation to the walls and partitions oriented non-perpendicularly (for example, forming an angle between 30° and 60°) in relation to the walls. In contrast, all the partitions in the end sections (where the resistance may be lower) may be oriented perpendicularly in relation to the walls.

### DESCRIPTION OF THE DRAWINGS

To complement the description and for the purpose of aiding to better understand the features of the invention according to a preferred practical embodiment thereof, a set of drawings is attached as an integral part of said description in which the following has been depicted with an illustrative and nonlimiting character:
Figure 1 shows a perspective view of the first element of the reinforcing element, according to a preferred embodiment of the invention.
Figure 2 shows a perspective view of the second element of the reinforcing element.
Figure 3 shows a perspective view of the reinforcing element, with the first element and the second element coupled to one another.

### PREFERRED EMBODIMENT OF THE INVENTION

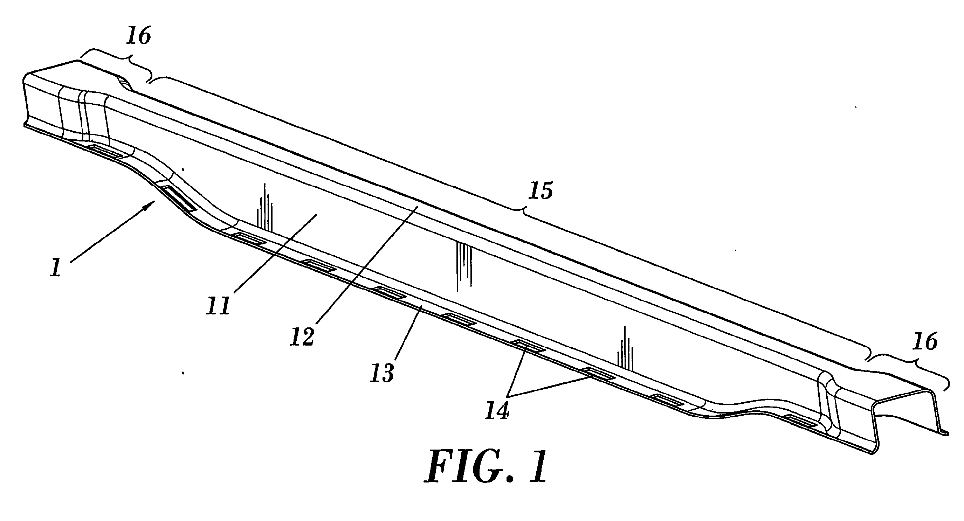

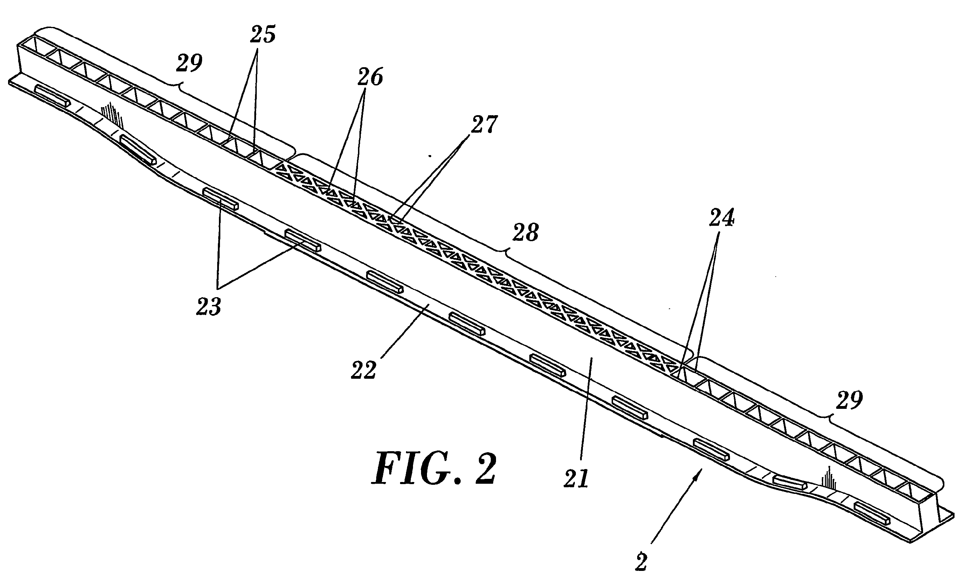

Figure 1 schematically illustrates the first element 1 of the side reinforcing element, according to a preferred embodiment of the invention. This first element, which can be of steel or another metallic material which have been described above, has a U-shaped cross section with two side walls 11 joined by a central part 12 which together determine a longitudinal housing with a longitudinal opening to receive the second element 2 (shown in Figure 2).

The side walls end in respective longitudinal flanges 13 with through holes 14 having a substantially rectangular configuration. The first element further has a central section 15 extending along most of the longitudinal extension of the element, and two end sections 16 having a different configuration than that of the central section and which are adapted for coupling the element to a vehicle door structure.

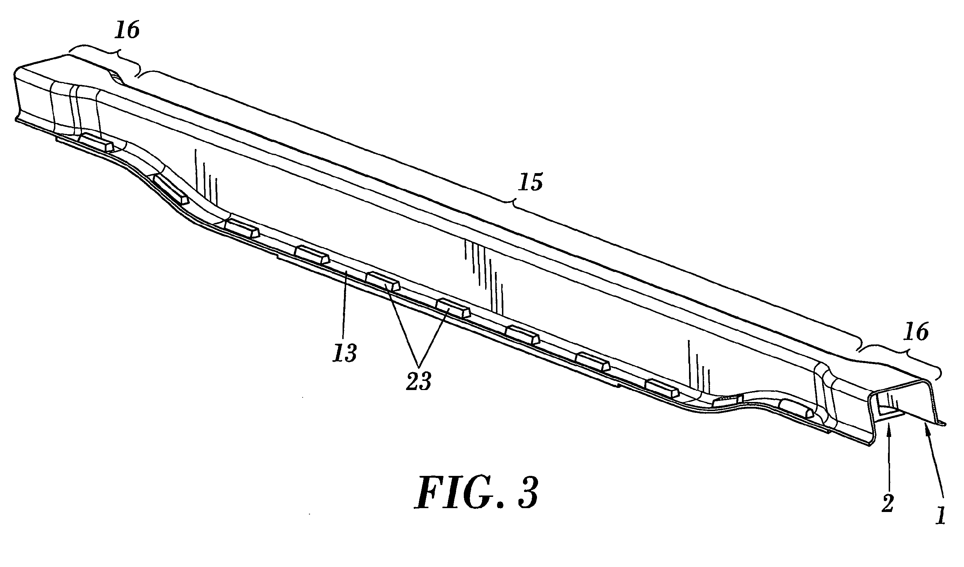

In addition, Figure 2 shows how the second element 2 has a main part 21 extending longitudinally and which is configured to be housed in the longitudinal housing of the first element 1, between its walls 11. Two flanges 22 provided with rectangular lugs 23 extend along the main part 21, such lugs being configured to be introduced in the through holes 14 of the flanges 13 of the first element 1, to allow the first element and the second element to couple to one another by tongue and groove coupling, which facilitates handling the assembly. Therefore, and as can be deduced from Figure 3, since the first element 1 and the second element 2 are coupled, part of the outer surface of the side reinforcing element comprises the flanges 22 and the back of the main part 21 of the second element 2.

As can be seen, the main part 21 of the second element 2 comprises two walls 24 joined by a plurality of partitions (25, 26, 27). The partitions of the second element are arranged with greater density in the central section 28 than they are in the end sections 29, such that the central section 28 has greater resistance against a side impact than the end sections 29. The central section comprises partitions 26 oriented perpendicularly in relation to the walls 24 and partitions 27 oriented non-perpendicularly in relation to the walls 24, whereas all the partitions 25 in the end sections 29 are oriented perpendicularly in relation to the walls 24.

In this text the word "comprise" and variants thereof (such as "comprising", etc.) must not be interpreted in an exclusive sense, i.e. they do not exclude the possibility that the description may include other elements, steps, etc.

In addition, the invention is not limited to the specific embodiments that have been describe, but it also includes, for example, the variants that can be carried out by a person skilled in the art (for example in terms of choosing the materials, size, components, configuration, etc.), within the scope of the claims.

## Claims

1. A side reinforcing element for motor vehicle doors, comprising
a first element (1) and a second element (2),
said first element (1) being of a first material, said first material being a metallic material,
said second element (2) being of a second material different from said first material, and
said first element (1) and said second element (2) being couplable to one another such that when said first element (1) and said second element (2) are coupled to one another, the reinforcing element has an outer surface at least a part of which is of said second material,
wherein
- the first element (1) has a configuration defining a longitudinal housing configured to receive a main part (21) of the second element,
- the first element (1) has a substantially U-shaped cross section with two side walls (11) joined by a central part (12), said walls and central part defining said longitudinal housing.
- said side walls (11) end in respective longitudinal flanges (13),
- said longitudinal flanges (13) have through holes (14),
- said through holes (14) have a substantially rectangular configuration,
- the second element (2) has a main part (21) extending longitudinally and which is configured to be housed in said longitudinal housing of the first element (1),
- the second element comprises two flanges (22) extending along the main part (21), said flanges (22) of the second element being provided with lugs (23) configured to be introduced in said through holes (14) of the first element (1) for the coupling between the first element and the second element, said lugs (23) having a cross section with rectangular configuration corresponding to the rectangular configuration of the through holes (14); **characterized in that**
- the main part (21) of the second element (2) comprises two walls (24) joined by a plurality of partitions (25, 26, 27),
- the main part (21) of the second element (2) comprises a central section (28) and two end sections (29), the partitions (25, 26, 27) being arranged with greater density in the central section (28) than in the end sections (29), such that the central section (28) has greater resistance than the end sections (29),
- the central section comprises partitions (26) oriented perpendicularly in relation to the walls (24) and partitions (27) oriented non-perpendicularly in relation to the walls (24),
- all the partitions (25) in the end sections (29) are oriented perpendicularly in relation to the walls (24).

2. A side reinforcing element according to claim 1, **characterized in that** the first material is steel.

3. A side reinforcing element according to any of the previous claims, **characterized in that** the second material is plastic.

4. A side reinforcing element according to any of the previous claims, **characterized in that** the first element (1) comprises a central section (15) extending along most of the longitudinal extension of the first element, and two end sections (16) having a different configuration than that of the central section, the configuration of the end sections (16) being adapted for coupling the element to a vehicle door structure.

5. A side reinforcing element according to any of the preceding claims, **characterized in that** it is configured such that when said first element (1) and second element (2) are coupled to one another, part of the outer surface of the side reinforcing element comprises the flanges (22) of the second element.

## Patentansprüche

1. Seitenverstärkungselement für Kraftfahrzeugtüren, das umfasst:
ein erstes Element (1) und ein zweites Element (2),
wobei das erste Element (1) aus einem ersten Material ist und das erste Material ein Metallmaterial ist,
das zweite Element (2) aus einem zweiten Material, verschieden von dem ersten Material, ist und
das erste Element (1) und das zweite Element (2) so aneinander koppelbar sind, dass, wenn das erste Element (1) und das zweite Element (2) aneinandergekoppelt sind, das Verstärkungselement eine Außenfläche hat, von der wenigstens ein Teil aus dem zweiten Material ist,
wobei
- das erste Element (1) eine Konfiguration hat, die ein längliches Gehäuse bildet, das konfiguriert ist, um einen Hauptteil (21) des zweiten Elementes aufzunehmen,
- das erste Element (1) ein im Wesentlichen U-förmiges Profil hat, mit zwei Seitenwänden (11), die durch einen zentralen Teil (12) verbunden sind,
wobei die Wände und der zentrale Teil das längliche Gehäuse bilden,
- die Seitenwände (11) in jeweiligen Längsflanschen (13) enden,
- die Längsflansche (13) Durchbrechungen (14) aufweisen,
- die Durchbrechungen (14) eine im Wesentlichen rechteckige Konfiguration aufweisen,
- das zweite Element (2) einen Hauptteil (21) hat, der sich längs erstreckt und der konfiguriert ist, um in das längliche Gehäuse des ersten Elementes (1) aufgenommen zu werden,
- das zweite Element zwei Flansche (22) umfasst, die sich entlang des Hauptteils (21) erstrecken, wobei die Flansche (22) des zweiten Elementes mit Ansätzen (23) versehen sind, die konfiguriert sind, um zur Kopplung des ersten Elementes mit dem zweiten Element in die Durchbrechungen (14) des ersten Elementes (1) eingeführt zu werden,
wobei die Ansätze (23) ein Profil mit rechteckiger Konfiguration haben, die der rechteckigen Konfiguration der Durchbrechungen (14) entspricht, und
**dadurch gekennzeichnet ist, dass**
- der Hauptteil (21) des zweiten Elementes (2) zwei Wände (24) umfasst, die durch eine Vielzahl von Trennwänden (25, 26, 27) verbunden sind,
- der Hauptteil (21) des zweiten Elementes (2) einen zentralen Abschnitt (28) und zwei Abschlussabschnitte (29) umfasst, wobei die Trennwände (25, 26, 27) in dem zentralen Abschnitt (28) mit größerer Dichte angeordnet sind als in den Abschlussabschnitten (29), so dass der zentrale Abschnitt (28) eine größere Festigkeit als die Abschlussabschnitte (29) hat,
- der zentrale Teil zwei Trennwände (26), die in Beziehung zu den Wänden (24) senkrecht angeordnet sind, und Trennwände (27), die in Beziehung zu den Wänden (24) nicht senkrecht angeordnet sind, umfasst und dass
- alle Trennwände (25) in den Abschlussabschnitten (29) in Beziehung zu den Wänden (24) senkrecht ausgerichtet sind.

2. Seitenverstärkungselement nach Anspruch 1, **dadurch gekennzeichnet, dass** das erste Material Stahl ist.

3. Seitenverstärkungselement nach einem der vorhergehenden Ansprüche, **dadurch gekennzeichnet, dass** das zweite Material Kunststoff ist.

4. Seitenverstärkungselement nach einem der vorhergehenden Ansprüche, **dadurch gekennzeichnet, dass** das erste Element (1) einen zentralen Abschnitt (15), der sich entlang des Großteils der Längsausdehnung des ersten Elementes erstreckt, und zwei Abschlussabschnitte (16) umfasst, die eine andere Konfiguration als die des zentralen Abschnitts aufweisen, wobei die Konfiguration der Abschlussabschnitte(16) eingerichtet ist, um das Element an eine Fahrzeugtürstruktur zu koppeln.

5. Seitenverstärkungselement nach einem der vorhergehenden Ansprüche, **dadurch gekennzeichnet, dass** es derartig konfiguriert ist, dass, wenn das erste Element (1) und das zweite Element (2) aneinandergekoppelt sind, Außenflächenteile des Verstärkungselementes die Flansche (22) des zweiten Elementes umfassen.

## Revendications

1. Eléments de renforcement latéral de portière d'un véhicule automobile comprenant:
un premier élément (1) et un second élément (2),
- le premier élément (1) étant en une première matière, qui est une matière métallique,
- le second élément (2) étant en une seconde matière différente de la première matière et
- le premier élément (1) et le second élément (2) pouvant être couplés l'un à l'autre de façon que lorsqu'ils sont couplés l'un à l'autre, l'élément de renforcement présente une surface extérieure dont au moins une partie est dans la seconde matière,
dans lesquels,
- le premier élément (1) a une configuration en forme de boîtier longitudinal pour recevoir la partie principale (21) du second élément,
- le premier élément (1) a une section pratiquement en (U) avec deux parois latérales (11) réunies par une partie centrale (12), les parois latérales et la partie centrale formation un boîtier longitudinal,
- les parois latérales (11) se terminent par des brides longitudinales (13) respectives,
- les brides longitudinales (13) ont des orifices traversants (14),
- les orifices traversants (14) ont une configuration pratiquement rectangulaire,
- le second élément (2) a une partie principale (21) s'étendant longitudinalement et configurée de façon à être logée dans le boîtier longitudinal du premier élément (1),
- le second élément se compose de deux brides (22) s'étendant le long de la partie principale (21), les brides (22) du second élément comportant des pattes (23) configurées de façon à pouvoir s'introduire dans les orifices traversants (14) du premier élément (1) pour le couplage entre le premier élément et le second élément, les pattes (23) ayant une section transversale de configuration rectangulaire correspondant à la configuration rectangulaire des orifices traversants (14),
**caractérisés en ce que**
- la partie principale (21) du second élément (2) est formée de deux parois (24) réunies par un ensemble de cloisons (25, 26, 27),
- la partie principale (21) du second élément (2) est formée d'une section centrale (28) et de deux sections d'extrémité (29), les cloisons (25, 26, 27) étant réparties suivant une densité plus importante dans la section centrale (28) que dans les sections d'extrémité (29) de sorte que la section centrale (28) offre une plus grande résistance que les sections d'extrémité (29),
- la section centrale comporte des cloisons (26) orientées perpendiculairement aux parois (24) et des cloisons (27) orientées de manière non perpendiculaire aux parois (24),
- toutes les cloisons (25) des sections d'extrémité (28) sont orientées perpendiculairement aux parois (24).

2. Eléments de renforcement latéral selon la revendication 1,
**caractérisés en ce que**
la première matière est de l'acier.

3. Eléments de renforcement latéral selon l'une quelconque des revendications précédentes,
**caractérisés en ce que**
la seconde matière est une matière plastique.

4. Eléments de renforcement latéral selon l'une quelconque des revendications précédentes,
**caractérisés en ce que**
le premier élément (1) comporte une section centrale (15) s'étendant pratiquement le long de l'extension longitudinale du premier élément et deux sections d'extrémité (16) ont une configuration différente de celle de la section centrale,
la configuration des sections d'extrémité (16) étant adaptée pour le couplage de l'élément à une structure de portière de véhicule.

5. Elément de renforcement latéral selon l'une quelconque des revendications précédentes,
**caractérisé en ce qu'**
il est configuré de façon que lorsque le premier élément (1) et le second élément (2) sont couplés l'un à l'autre, une partie de la surface extérieure de l'élément de renforcement latéral comporte les brides (22) du second élément.
